# EUROPEAN PATENT APPLICATION

(11) **EP 4 309 995 A1**
(43) Date of publication of application: **24.01.2024**
(21) Application number: 22191173.8
(22) Date of filing: 19.08.2022
(51) Int. Cl.: B63H 5/10

(54) **MARINE ACCELERATING PROPELLER**

(30) Priority: 21.07.2022 TW 111127414
(71) Applicant: Solas Science & Engineering Co., Ltd., Taichung City 408 (TW)
(72) Inventor: LIN, Yeun-Junn, 408 TAICHUNG CITY (TW)
(74) Representative: Straus, Alexander

(57) **Abstract**

A propeller (10) includes a propeller shaft (20), a plurality of first blades (30), and a plurality of second blades (40). The first blades (30) are connected to the outer peripheral surface of the propeller shaft (20) so as to be rotated synchronously with the propeller shaft (20). The second blades (40) are connected to the outer peripheral surface of the propeller shaft (20), so that they are rotated in the same direction as the first blades (30). The second blades (40) are located in front of the first blades (30) and correspond to the first blades (30) in a one-to-one manner. The size of the second blades (40) is smaller than the size of the first blades (30), and the rotation direction of the second blades (40) is the same as the rotation direction of the first blades (30). Thereby, the propeller (10) of the present invention can improve the operation efficiency of the boat at high speed without increasing the size of the first blades (30).

## Description

### BACKGROUND OF THE INVENTION

### 1. Field of the Invention

The present invention relates to marine propeller technology, and more particularly to a marine accelerating propeller.

### 2. Description of the Related Art

In order to increase the speed of ordinary boats, they usually choose to configure larger size propellers (such as 16 inches or 17 inches). However, in addition to the high cost, the aforementioned large-sized propellers have a deep draft when in use, so when sailing in a shallow waterway, the operation safety of the boat may be affected due to the deep draft. Therefore, how to increase the driving speed without increasing the size of the propeller (the common size is 15.5 inches) is an urgent problem to be overcome by the industry at present.

In addition, the propeller will generate lateral flow and longitudinal wake during the rotation process, and the lateral flow will generate sailing resistance and affect the propulsion efficiency.

In order to limit the lateral flow and accelerate the longitudinal wake to improve the propulsion efficiency of the propeller, the propeller disclosed by CN205256630U improves the propulsion efficiency by means of a dual-flow structure. However, the outer blades and inner blades do not correspond to each other and the spiral directions are opposite, so the efficiency that can be improved in actual use is limited, so the practicability is not high.

### SUMMARY OF THE INVENTION

The present invention has been accomplished under the circumstances in view. It is the main object of the present invention to provide a marine accelerating propeller, which can improve the operation efficiency of the boat at high speed without increasing the size.

To achieve this and other objects of the present invention, the marine accelerating propeller comprises a propeller shaft, a plurality of first blades and a plurality of second blades. The first blades are connected to the outer peripheral surface of the propeller shaft. The second blades are connected to the outer peripheral surface of the propeller shaft and rotatable in the same direction with the first blades following the propeller shaft. The second blades are located in front of the first blades and correspond to the first blades in a one-to-one manner. The size of the second blades is smaller than the size of the first blades. The rotation direction of the second blades is the same as the rotation direction of the first blades.

As can be seen from the above, the propeller of the present invention reduces the lateral flow by the second blades with smaller sizes, and simultaneously increases the longitudinal wake by the second blades, In this way, the operating efficiency of the boat at high speed can be improved without increasing the size of these first blades.

Preferably, the second blades are 70% of the first blades in diameter.

Preferably, the second blades are one third of the first blades in area.

Preferably, in a projection direction parallel to the axial direction of the propeller shaft, each of the second blades completely falls within the range covered by the corresponding one of the first blades.

Preferably, the trailing edge of each second blade is located between the leading edges of two adjacent first blades. This can achieve the effect of reducing turbulence.

Preferably, the propeller shaft can be a one-piece structure, and can also be composed of a shaft body and a ring body set at the front end of the shaft body, wherein, the outer peripheral surface of the shaft body is connected to the first blades, and the outer peripheral surface of the ring body is connected to the second blades.

The detailed structure, characteristics, assembly or use of the marine accelerating propeller provided by the present invention will be described in the detailed description of the subsequent preferred embodiment. However, those with ordinary knowledge in the field of the present invention should be able to understand that these detailed descriptions and specific embodiments listed in the implementation of the present invention are only used to illustrate the present invention, not to limit the scope of the patent application of the present invention.

### BRIEF DESCRIPTION OF THE DRAWINGS

FIG. 1 is an oblique top elevational view of the marine accelerating propeller of the first embodiment of the present invention.
FIG. 2 is an exploded view of the marine accelerating propeller of the first embodiment of the present invention.
FIG. 3 is a side view of the marine accelerating propeller of the first embodiment of the present invention.
FIG. 4 is an end view of the marine accelerating propeller of the first embodiment of the present invention.
FIG. 5 is an oblique top elevational view of the marine accelerating propeller of the second embodiment of the present invention.
FIG. 6 is a graph of ship speed versus rotational speed for the propeller of the present invention and a conventional propeller.

### DETAILED DESCRIPTION OF THE INVENTION

The applicant first states here that throughout the specification, including the preferred embodiments described below and the claims in the scope of patent application, the terms related to directionality are based on the directions in the drawings. Secondly, in the preferred embodiments and drawings to be described below, the same element numbers represent the same or similar elements or their structural features.

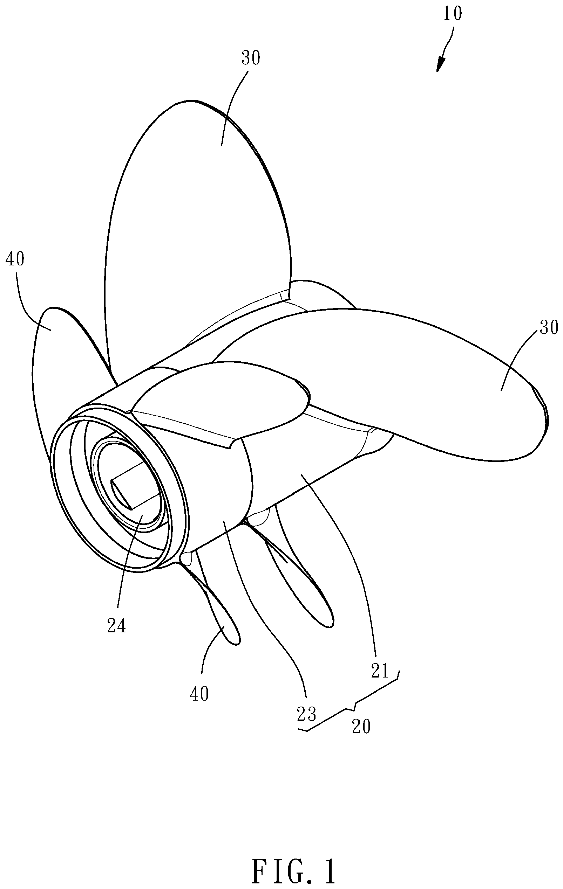

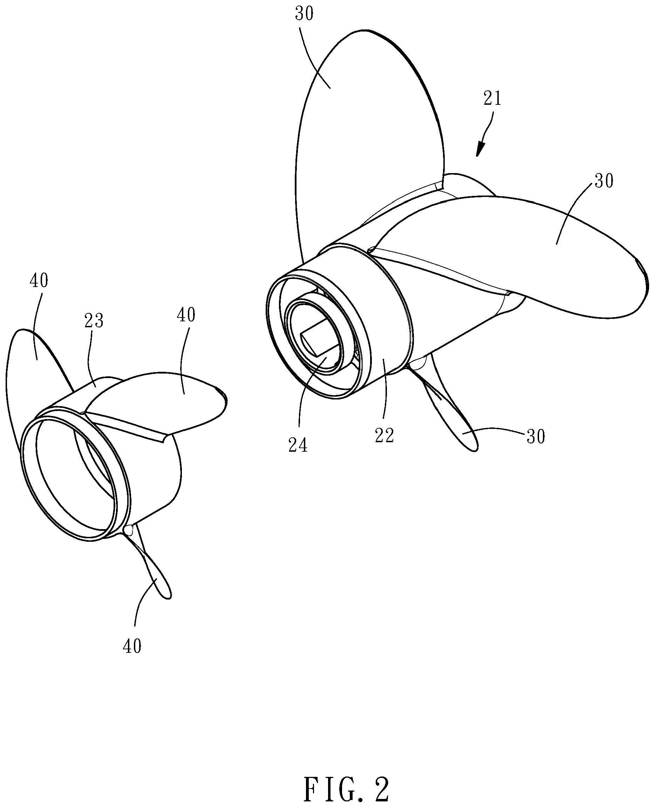

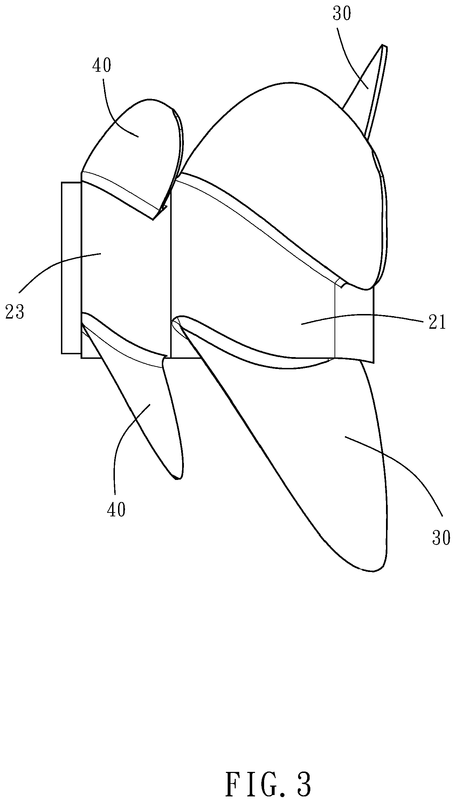

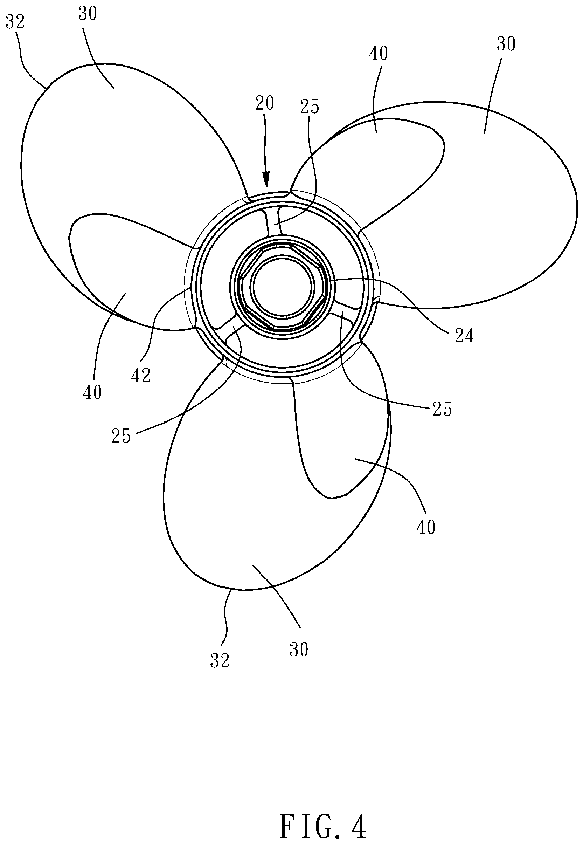

Referring to FIG. 1, the propeller **10** of the first embodiment of the present invention comprises a propeller shaft **20,** a plurality of first blades **30,** and a plurality of second blades **40.** The propeller shaft **20** is a two-piece structure composed of a shaft body **21** and a ring body **23** in this embodiment. As shown in FIGS. 2 and 3, the front end of the shaft body **21** has a mounting portion **22,** and the ring body **23** is fixed to the mounting portion **22** of the shaft body **21** by means of tight fitting or welding. In addition, the propeller shaft **20** further comprise a shaft sleeve **24,** as shown in FIG. 2 and FIG. 4, the shaft sleeve **24** is arranged in the shaft body **21** and connected to the inner peripheral surface of the shaft body **21** through three ribs **25.** The propeller shaft **20** is connected to a power source (not shown) with the shaft sleeve **24,** so that the propeller shaft **20** can be driven by the power source to rotate.

The first blades **30** are connected to the outer peripheral surface of the shaft body **21,** so that the first blades **30** can run synchronously with the propeller shaft **20.**

The second blades **40** are connected to the outer peripheral surface of the ring body **23,** so that the second blades **40** can run synchronously with the propeller shaft **20** and rotate in the same direction as the first blades **30** through the propeller shaft **20** to provide a diversion effect.

As shown in FIG. 3 and FIG. 4, the second blades **40** are located in front of the first blades **30** and correspond to the first blades **30** in a one-to-one manner, and the size of the second blades **40** is smaller than that of the first blades **30.** In this embodiment, the diameter of the second blades **40** is 11 inches, and the diameter of the first blades **30** is 15.5 inches, so the diameter of the second blades **40** is about 70% of the diameter of the first blades **30,** and the area of the second blades **40** is about one third of the area of the first blades **30.** In addition, the rotation direction of the second blades **40** is the same as that of the first blades **30.** As shown in FIG. 4, on the projection direction parallel to the axial direction of the propeller shaft **20,** the second blades **40** completely fall into the range covered by the corresponding first blades **30.** Moreover, the trailing edge **42** of each second blade **40** is approximately in the middle of the leading edges **32** of two adjacent first blades **30,** so that the effect of reducing turbulence can be achieved.

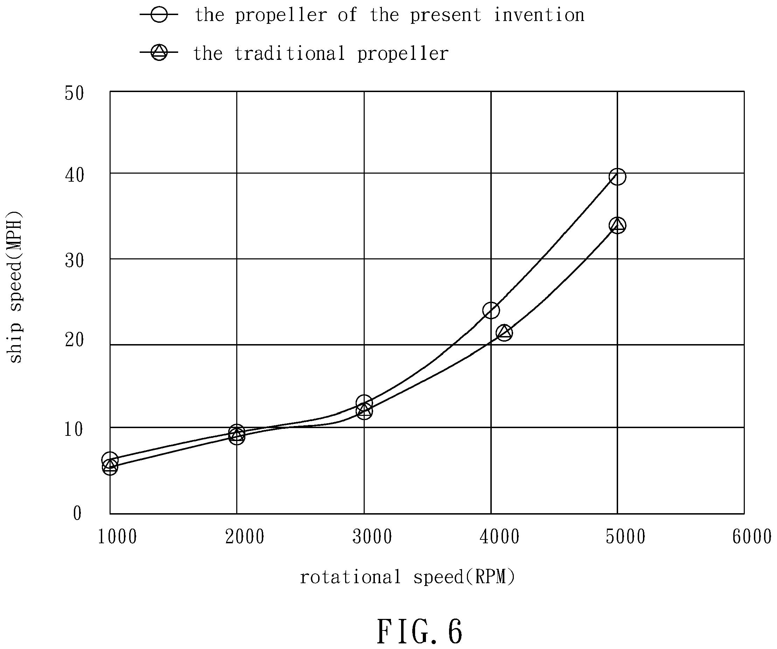

As can be seen from the above, the propeller **10** of the present invention utilizes the propeller shaft **20** to drive the first blades **30** and the second blades **40** to run in the same direction. During the operation, the second blades **40** with smaller size reduces the lateral flow, and at the same time, the second blades **40** increases the longitudinal wake in the direction of the first blades **30,** so as to reduce the sailing resistance and improve the propulsion efficiency. In addition, in FIG. 6, the traditional propeller only has the first blades **30,** while the propeller **10** of the present invention has the first blades **30** and the second blades **40.** As can be seen from FIG. 6 that when the rotational speed of the two is higher, the propeller **10** of the present invention will increase the ship speed more, so that the propeller **10** of the present invention can improve the operating efficiency of the boat at high speed without increasing the size of the first blades **30** (that is, keeping the size of 15.5 inches).

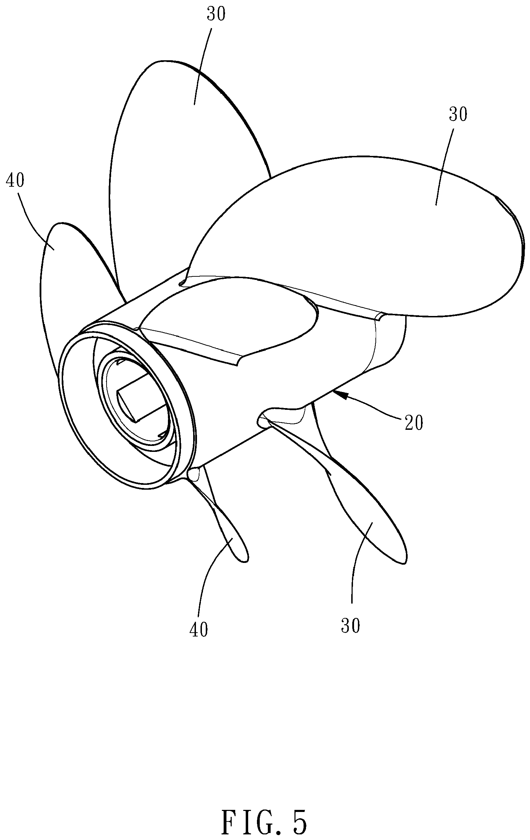

What needs to be supplemented at last is that propeller shaft **20** is not limited to two-piece structure, as shown in FIG. 5, the propeller shaft **20** can also be made in the mode of integral molding, and cooperate with the setting of the first blades **30** and the second blades **40** in the above-mentioned embodiment, the running efficiency of the boat can also be improved when running at high speed.

## Claims

1. A marine accelerating propeller (10), comprising:
a propeller shaft (20);
a plurality of first blades (30) connected to the outer peripheral surface of said propeller shaft (20); and
a plurality of second blades (40) connected to the outer peripheral surface of said propeller shaft (20) and rotatable in the same direction with said first blades (30) following said propeller shaft (20), said second blades (40) being located at a front side relative to said first blades (30) and corresponding to said first blades (30) in a one-to-one manner, the size of said second blades (40) being smaller than the size of said first blades (30), and the rotation direction of said second blades (40) being the same as the rotation direction of said first blades (30).

2. The marine accelerating propeller (10) as claimed in claim 1, wherein said second blades (40) are one third of said first blades (30) in area.

3. The marine accelerating propeller (10) as claimed in claim 1, wherein the diameter of said second blades (40) is 70% of the diameter of said first blades (30).

4. The marine accelerating propeller (10) as claimed in claim 1, wherein in a projection direction parallel to the axial direction of said propeller shaft (20), each of said second blades (40) completely falls within the range covered by the corresponding one of said first blades (30).

5. The marine accelerating propeller (10) as claimed in claim 1, wherein said first blades (30) are connected to the outer peripheral surface of a shaft body (21), said second blades (40) are connected to the outer peripheral surface of a ring body (23), and said ring body (23) is fixed at a front end of said shaft body (21) and forms said propeller shaft (20) with said shaft body (21).

6. The marine accelerating propeller (10) as claimed in claim 1, wherein the trailing edge (42) of each said second blade (40) is located between the leading edges (32) of two adjacent said first blades (30).
